# EUROPÄISCHE PATENTSCHRIFT

(11) **EP 0 904 306 B1**
(45) Veröffentlichungstag und Bekanntmachung des Hinweises auf die Patenterteilung: **10.05.2000**
(21) Anmeldenummer: 97927178.0
(22) Anmeldetag: 12.06.1997
(51) Int. Cl.: C08F 265/04, C08F 4/40

(54) **VERFAHREN ZUR HERSTELLUNG VON MIT ACRYLKAUTSCHUK MODIFIZIERTEN FORMMASSEN MITTELS IN DEN ACRYLKAUTSCHUK EINGEBAUTEN GRUPPEN, DIE MIT EINER REDOXKOMPONENTE ZU RADIKALEN ZERSETZT WERDEN**
process for preparing moulding compounds, modified by acrylic rubber, using groups introduced into said acrylic rubber, which groups are decomposed by a redox constituent to form radicals
PROCEDE DE PRODUCTION DE MATIERES MOULABLES MODIFIEES AVEC DU CAOUTCHOUC ACRYLIQUE, AU MOYEN DE GROUPES INTRODUITS DANS LE CAOUTCHOUC ACRYLIQUE, POUVANT ETRE DECOMPOSES EN RADICAUX PAR UN COMPOSANT OXYDOREDUCTEUR

(30) Priorität: 13.06.1996 DE 19623661
(43) Veröffentlichungstag der Anmeldung: 31.03.1999
(73) Patentinhaber: BASF AKTIENGESELLSCHAFT, 67056 Ludwigshafen (DE)
(72) Erfinder: McKEE, Graham, Edmund, D-67433 Neustadt (DE); ROSENAU, Bernhard, D-67434 Neustadt (DE)
(74) Vertreter: Kinzebach, Werner, Dr.
(86) Internationale Anmeldenummer: EP9703084
(87) Internationale Veröffentlichungsnummer: WO9747669

(56) Entgegenhaltungen:
- FR-A- 2 328 004
- GB-A- 1 138 269
- US-A- 4 342 676

## Beschreibung

Die Erfindung betrifft ein Verfahren zur Herstellung von mit Acrylkautschuk modifizierten Formmassen, wobei in den Acrylkautschuk Monomere einpolymerisiert werden, die Gruppen enthalten, welche mit einer Redoxkomponente zu Radikalen zersetzt werden, und so hergestellte Formmassen.

Die Herstellung von kautschukmodifizierten Formmassen ist seit langem bekannt. Auch die Verwendung von elastomeren Acrylesterpolymeren mit Glasübergangstemperaturen von unter 0°C und bevorzugt von unter -10°C (Acrylkautschuk) für so modifizierte Formmassen ist seit fast 40 Jahren bekannt. Sie weisen gegenüber den mit Dien-Kautschuken hergestellten Formmassen eine verbesserte Witterungsbeständigkeit auf. In den modifizierten mehrphasigen Formmassen sind Domänen des Kautschuks in eine Matrix aus einem Thermoplasten eingebettet, wobei die Domänenstruktur die mechanischen Eigenschaften der resultierenden Formmassen stark mitbestimmt. Die Zähigkeit der Formmassen resultiert aus einer erhöhten Energieaufnahme bei der Deformation bis zum Bruch, wobei Energie zur Bildung von Mikrohohlräumen oder zur Einleitung von Ableitvorgängen der Matrixpolymerketten verbraucht wird. Die Mehrphasigkeit ist daher eine notwendige Voraussetzung für das Erreichen hoher Schlagzähigkeiten.

Nach wie vor besteht ein hoher Bedarf an mit Acrylkautschuk modifizierten Formmassen und insbesondere mit Acrylkautschuk modifizierten Styrol-Acrylnitril-Copolymeren (ASA-Formmassen), die eine hohe Schlagzähigkeit sowie gute Fließeigenschaften aufweisen. EP-0 095 919, EP-0 143 991, EP-0 438 418, JA-71 03 182, JA-60 21 0666; B. Vollmert, Die Angewandte Makromolekulare Chemie, Bd. 3, S. 1-27 (1968) und C.K. Riew, Rubber-Toughened Plastics, Advances in Chemistry Series 222, American Chemical Society, S. 15-64 beschreiben die Herstellung von mit Acrylkautschuk modifizierten Formmassen.

Die Herstellung von ASA-Formmassen in Emulsion ist in der Patentliteratur vielfach beschrieben (vgl. z.B. DE-A 19 11 882, DE-A 28 26 925, DE-A 31 29 378, DE-A 31 29 472, DE-A 31 49 046, DE-A 31 49 358, DE-A 32 06 136, DE- 32 27 555). Nachteilig bei dieser Herstellung in Emulsion ist das Erfordernis der Reinigung der anfallenden grösseren Mengen von Wasser sowie die aufwendige erforderliche Entfernung von Hilfsstoffen bei der Aufarbeitung der Formmassen, um spätere Störungen bei deren Verarbeitung (Verfärbung, Stippenbildung, Korrosion) zu vermeiden. Auch bleiben Wünsche bzgl. der Schlagzähigkeit, Reißfestigkeit und Glanzeigenschaften daraus hergestellter Formteile offen.

Aus der vor über 30 Jahren veröffentlichten DE-B 11 82 811 ist bekannt, zur Herstellung einer kautschukmodifizierten Formmasse einen Acrylester zusammen mit einem vernetzenden Monomeren in Lösung zu polymerisieren, wobei nach einem Monomerenumsatz von nur 20 bis 40 Gew.-% die aufzupropfenden Monomeren Styrol und Acrylnitril zugegeben werden, deren Polymerisation dann in Lösung oder Masse durchgeführt wird. Aufgrund der nicht konstanten Zusammensetzung bei der Pfropfungsreaktion und wegen des Einpolymerisierens von Kautschukeinheiten in die Pfropfhülle kommt es zu einer Herabsetzung der Vicat-Erweichungstemperatur und einer Verschlechterung weiterer mechanischen Eigenschaften der resultierenden Formmasse.

Um bei der Pfropfungsreaktion eine höhere Pfropfausbeute zu erzielen ist es vorteilhaft, bei der Herstellung des Acrylkautschuks Comonomere mit Gruppen einzupolymerisieren, die bei der anschließenden Pfropfungsreaktion zu Radikalen aufspalten. EP-0 001 782 beschreibt ein Verfahren zur Herstellung von schlagfesten und alterungsbeständigen Pfropfmischpolymerisaten, wobei in einen Acrylkautschuk Monomere, die Peroxidgruppen, Azogruppen oder labile C-C-Bindungen enthalten, einpolymerisiert werden, die dann unter thermischer Initiierung aufspalten und mit harte Polymerisate bildenden Monomeren die Pfropfhülle bilden. Da die Zersetzung der radikalbildenden Gruppen erhöhte Temperaturen erfordert, wird auch bereits die Polymerisation des die Pfropfhülle bildenden Monomeren thermisch initiiert, so daß die Pfropfausbeute aufgrund der dadurch geringeren zur Verfügung stehenden Monomermenge nicht optimal ist. Um die mechanischen Eigenschaften der resultierenden Acrylkautschuk-modifizierten Formmassen weiter zu verbessern, ist es wünschenswert, die thermische Initiierung der die Pfropfhülle bildenden Monomeren zugunsten der Initiierung durch die radikalbildenden Gruppen zurückzudrängen.

In H.G. Elias, Makromoleküle Bd. 1, S. 450, Hüthig & Wepf Verlag, und Encyclopedia of Polymer Science and Engineering, Vol. 13, S. 762-776, Verlag John Wiley & Sons, 1988, wird die Initiierung mit Redox-Initiatoren durch Reaktion eines Reduktionsmittels mit einem Oxidationsmittel beschrieben. Peroxide enthaltende Monomere können mit einem Reduktionsmittel oder Aktivator zu polymerisationsauslösenden Radikalen zersetzt werden, wobei die erforderliche Aktivierungsenergie geringer ist als die für den rein thermischen Zerfall der Peroxide, so daß Polymerisationen bei niedrigeren Temperaturen ausgelöst werden können.

Der Erfindung liegt die Aufgabe zugrunde, ein Verfahren zur Herstellung von mit Acrylkautschuk modifizierten Formmassen mit verbesserten mechanischen Eigenschaften, insbesondere erhöhten Schlagzähigkeiten, Kerbschlagzähigkeiten und Lochkerbschlagzähigkeiten, kombiniert mit einer guten Fließfähigkeit zu schaffen.

Es wurde nun gefunden, daß die Aufgabe gelöst werden kann, wenn ein modifizierter Acrylkautschuk hergestellt wird, der mindestens ein Peroxidgruppen enthaltendes Monomer einpolymerisiert enthält, und der Acrylkautschuk in den die harte Pfropfschale bildenden Monomeren gelöst oder gequollen wird und bei dieser Mischung die Pfropfpolymerisation durch die Verwendung eines Redoxsystems eingeleitet wird, das die einpolymerisierten Peroxidgruppen enthaltenden Monomeren und mindestens ein Reduktionsmittel umfaßt.

Gegenstand der vorliegenden Erfindung ist somit ein Verfahren zur Herstellung von mit Acrylkautschuk modifizierten Formmassen F durch
(a) Copolymerisation einer Mischung A, die
   (a1) mindestens ein Alkylacrylat und/oder Alkylmethacrylat (Am1) der Formel (I)

      CH₂ = CR¹ - COOR² (I)

      worin
      R¹ ein Wasserstoffatom oder eine Methylgruppe und
      R² eine Alkylgruppe mit 1 bis 32 C-Atomen ist,
   (a2) mindestens ein Peroxidgruppen-enthaltendes Monomeres (Am2) mit einer copolymerisationsfähigen C=C-Doppelbindung, und
   (a3) gegebenenfalls ein weiteres Monomer (Am3) mit zwei oder mehr copolymerisationsfähigen C=C-Doppelbindungen und/ oder
   (a4) gegebenenfalls mindestens ein zusätzliches copolymerisierbares, olefinisch ungesättigtes Monomeres (Am4) enthält,
   unter weitgehendem Erhalt der Peroxidgruppen der Monomeren (Am2) zu einem Acrylkautschuk B,
(b) Lösen oder Quellen des Acrylkautschuks B in einem oder mehreren die harte Pfropfschale bildenden olefinisch ungesättigten Monomeren (Cm) zu einer Mischung C, und
(c) Polymerisation der Mischung C zu der Acrylkautschuk modifizierten Formmasse F in einer oder mehreren Stufen, wobei die Polymerisation zumindest in der ersten Stufe und bis zu einem Umsatz von über 15 Gew.-% der Monomeren als Polymerisation in Substanz oder Lösung unter Bedingungen durchgeführt wird, bei denen die radikalbildenden Peroxidgruppen der einpolymerisierten Monomere (Am2) aufspalten,
das dadurch gekennzeichnet ist, daß bei der Polymerisation der Mischung C die Zersetzung der Peroxidgruppen im Acrylkautschuk B durch die Verwendung eines Redoxsystems eingeleitet wird, das die einpolymerisierten Monomeren (Am2) und mindestens ein Reduktionsmittel R umfaßt.

Für die Herstellung des Acrylkautschuks B geeignete Alkylacrylate (Am1) und/oder Alkylmethacrylate (Am1) sind Ester der Acryl- und/ oder Methacrylsäure mit Alkoholen von 1 bis 32 C-Atomen, bevorzugt 1-18 C-Atomen, insbesondere bevorzugt 1 bis 8 C-Atomen.

Beispiele für Alkylgruppen R² mit 1 bis 32 Kohlenstoffatomen sind die Methyl-, Ethyl-, n-Propyl-, iso-Propyl-, n-Butyl-, iso-Butyl-, tert.-Butyl-, n-Pentyl-, iso-Pentyl-, n-Hexyl-, n-Heptyl-, n-Octyl-, Ethylhexyl-, n-Nonyl-, n-Decyl-, n-Dodecyl-, n-Tetradecyl-, n-Hexadecyl-, n-Octadecyl-, n-Eicosyl-, n-Docosyl-, n-Tetracosyl-, n-Hexacosyl-, n-Octacosyl-, n-Triacontyl-, n-Hentriacontyl- und Dotriacontyl-Gruppe.

Bevorzugte Alkylgruppen R² sind die n-Butyl- und die 2-Ethylhexylgruppe. Durch die Auswahl von Acrylaten, Methacrylaten oder Mischungen davon, kann die Glasübergangstemperatur T_{g} des resultierenden Acrylkautschuks B eingestellt werden, wobei die Glasübergangstemperatur T_{g} bei unter 0°C und bevorzugt unter -10°C liegen soll. Diese Einstellung der Glasübergangstemperatur beruht darauf, daß die Glasübergangstemperatur von Acrylat- und Methacrylat-Polymeren mit zunehmender Länge der Seitenketten zunächst abnimmt, bei C₇-Alkylacrylat bzw. C₁₀-Alkylmethacrylat ein Minimum durchläuft und dann wieder steigt. Die Bestimmung der Glasübergangstemperatur kann dabei mittels der DSC-Methode (K.H. Illers, Makromolekulare Chemie 127 (1969) S. 1 oder nach ASTM 3418) erfolgen. Der Gehalt an Alkylacrylat-Monomeren (Am1) im Acrylkautschuk B liegt bei mindestens 30 Gew.-%, bevorzugt mindestens 60 Gew.-%, insbesondere bevorzugt mindestens 90 Gew.-%.

Das Gemisch A enthält mindestens ein Peroxidgruppen-enthaltendes Monomer (Am2) mit einer copolymerisierbaren C=C-Doppelbindung, befähigt, bei Initiierung, wie z.B. thermischer Zersetzung, Radikale zu bilden und somit bei der Polymerisation der Mischung C wie ein Radikalstarter zu wirken, um die Pfropfausbeute zu erhöhen. Daher soll das thermisch labile Monomer (Am2) bei seiner eigenen Copolymerisation zur Herstellung des Acrylkautschuks B keine oder nur wenige freie Radikale bilden. Bei den erfindungsgemäß eingebauten, radikalbildenden Gruppen liegt die Temperatur, bei der sie eine Halbwertszeit von einer Stunde haben, so hoch, daß sie im Verfahren vor der Polymerisation der Mischung C stabil sind. Die Polymerisation der Mischung C erfolgt insbesondere im Temperaturbereich zwischen 80°C und 200°C, vorzugsweise zwischen 90 und 150°C. Die Bestimmung der Temperatur, bei der die Monomeren (Am2) eine Halbwertszeit von einer Stunde aufweisen, ist in der Broschüre 'Initiators for Polymer Production' der Firma AKZO beschrieben. Beispiele für geeignete Monomere (Am2), die diese Gruppen enthalten, sind tert.-Butyl-3-isopropenylcumylperoxyd, tert.-Butylperoxycrotonat und tert.-Butylmonoperoxymaleat, wobei die ersten beiden bevorzugt verwendet werden.

Für die Herstellung des Acrylkautschuks B können weitere Monomere (Am3) mit mindestens zwei olefinisch ungesättigten Doppelbindungen verwendet werden. Beispiele für solche weiteren Comonomeren (Am3) sind Allyl(meth)acrylat, 1,4-Butandioldi(meth)acrylat, Divinylbenzol, Triallylcyanurat und Dihydrocyclopentadienyl(meth)acrylat. Bevorzugt werden Allyl(meth)acrylat und Dihydrocyclopentadienyl(meth)acrylat.

Beispiele weiterer Monomere (Am4), die für die Herstellung des Acrylkautschuks B verwendet werden können, sind Styrol, Acrylnitril, Acrylsäure, Methacrylsäure, Derivate der beiden letzteren, wie Methylmethacrylat, Acrylamid, Methacrylamid, Derivate des Acrylamids und -methacrylamids, wie N-Methylolacrylamid, N-Methylolmethacrylamid und deren Ether und Ester, wie z.B. deren Methylether, Butylether oder Acetate sowie Glycidylacrylat und Glycidylmethacrylat, Maleinsäureanhydrid oder Maleinimid.

Die Mischung A enthält bis zu 60 Gew.-%, vorzugsweise bis zu 40 Gew.-% dieser Monomeren (Am3, Am4).

Nach einer bevorzugten Ausführungsart des erfindungsgemäßen Verfahrens enthält die Mischung A
30-99,95 Gew.-% des Alkylacrylats oder -methacrylats (Am1),
0,05-10 Gew.-% des Peroxidgruppen-enthaltenden Monomeren (Am2),
und
0-60 Gew.-% der Monomeren (Am3, Am4),
insbesondere bevorzugt
36-99,5 Gew.-% des Alkylacrylats oder -methacrylats (Am1), 0,1-4 Gew.-% des Peroxidgruppen-enthaltenden Monomeren (Am2), und
0-60 Gew.-% der Monomeren (Am3, Am4).

Die Copolymerisation der Monomeren (Am1) mit (Am2) und gegebenenfalls (Am3) und/oder (Am4) kann in bekannter Weise durchgeführt werden und wird bevorzugt mit Radikalinitiatoren ausgelöst.

Nach der Herstellung und ggfs. erforderlichen Isolierung des Acrylkautschuks B wird dieser erfindungsgemäß in dem/der die Pfropfäste und die Hartmatrix bildenden Monomeren (Cm) gelöst oder gequollen.

Beispiele für geeignete Monomeren (Cm) sind Styrol, α-Methylstyrol, weitere Styrol-Derivate und Acrylnitril, gegebenenfalls modifiziert mit kleinen Mengen Acrylsäure, Methacrylsäure, Derivate der beiden letzteren, wie Methylmethacrylat, Acrylamid, Methacrylamid, Derivate des Acrylamids und -methacrylamids, wie Acrylamidmethylolmethylether, N-Methylolacrylamid, Methacrylamidmethylolmethylether, N-Methylolmethacrylamid, Methacrylamid-N-methylolbutylether und Methacrylamid-N-methylolacetat, sowie Glycidylacrylat und Glycidylmethacrylat, Maleinsäureanhydrid und Maleinimid.

Bevorzugte Monomere (Cm) sind Styrole der Formel 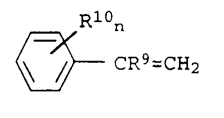 worin R⁹ und R¹⁰ gleich oder verschieden sein können und Wasserstoff oder (C₁-C₈)-Alkyl bedeuten und n Werte von 0 bis 4 darstellen kann sowie Acrylnitril und/oder Methyl(meth)acrylat.

Insbesondere bevorzugt werden Styrol und Acrylnitril, so daß nach dem erfindungsgemäßen Verfahren speziell ASA-Formmassen hergestellt werden.

Die Polymerisation des/der Monomeren (Cm) in Gegenwart des in den Monomeren (Cm) gelösten oder gequollenen Acrylkautschuks B, d.h. die Polymerisation der Mischung C erfolgt als Radikalpolymerisation, wobei zur Initiierung die Peroxidgruppen der in den Acrylkautschuk einpolymerisierten Monomeren (Am2) durch Zugabe eines Reduktionsmittels R zersetzt werden. Erfindungsgemäß bilden die in den Acrylkautschuk B einpolymerisierten Peroxidgruppen des Monomeren (Am2) und ein oder mehrere der Mischung C zugesetzte Reduktionsmittel R ein Redoxsystem.

Vorteilhafterweise wurde jetzt gefunden, daß durch Verwendung eines solchen Redoxsystems die Pfropfpolymerisation der Monomeren (Cm) bei einer tieferen Temperatur abläuft, als wenn keine Redoxsysteme verwendet werden. Erstaunlicherweise wurde auch beobachtet, daß durch die Verwendung des Redoxsystems eine viel höhere Fließfähigkeit der Formmassen erzielt wurde, ohne daß die Schlagzähigkeit sich merklich verschlechtert. Möglicherweise liegt der Grund darin, daß bei diesen niedrigen Temperaturen die thermische Initiierung von Monomer (Cm) unterdrückt wird und nur die Initiierung durch die Peroxide stattfindet. Da diese Peroxide in der Polymerkette eingebaut sind, führt diese Initiierung zu einer höheren Pfropfausbeute. Werden diese Peroxide bei einer höheren Temperatur zersetzt, d.h. ohne Redoxsystem, ist die zur Verfügung stehende Monomermenge geringer als bei der Zersetzung bei tieferen Temperaturen mit Redoxsystem, da ein Teil des Monomers schon durch thermische Initiierung polymerisiert ist. Wenn weniger Monomer zur Verfügung steht, dann ist vermutlich die Pfropfausbeute von Monomer (Cm) auf den Kautschuk B geringer.

Bevorzugt als Redoxpartner für Peroxide werden mono- und polymere, primäre, sekundäre und tertiäre Amine, wie z.B.

R³-NH₂, R⁴-N(R⁵)H und R⁶-N(R⁷)R⁸

worin R³ bis R⁸ Alkyl-, Cycloalkyl- oder aromatische Gruppen mit 1 bis 100 C-Atomen darstellen sowie Diamine, wie N,N-Dimethylanilin, und Polyamine, wie Tetraethylenpentamin. Des weiteren können als Redoxpartner ein oder mehrere Metallionen, bevorzugt Übergangsmetallionen, verwendet werden.

Die Polymerisation der Mischung C kann entweder durchgehend in Masse (Polymerisation in Substanz) oder als Lösungspolymerisation erfolgen, oder sie kann nach einem Umsatz von über 15 % bevorzugt als Suspensionspolymerisation fortgeführt und beendet werden.

Die nach der Polymerisation der Mischung C die eine Pfropfpolymerisation von Monomeren (Cm) auf den Acrylkautschuk B einschließt, erhaltene Formmasse F enthält im allgemeinen 1 bis 60 und insbesondere 5 bis 40 Gew.-% des Acrylkautschuks B. Die Obergrenze des Acrylkautschukgehalts ergibt sich daraus, daß die Formmasse F trotz der eingebetteten Domänen des Kautschuks eine ausreichende Festigkeit aufweisen muß. Die Untergrenze ist im wesentlichen dadurch bestimmt, daß bei einer Deformation von der Formmasse ausreichend Energie aufgenommen wird. In der Formmasse F kommen die Acrylkautschuke in gepfropfter Form als Teilchen mit einem Durchmesser zwischen 0,1 bis 20 µm und bevorzugt zwischen 0,1 und 10 µm vor.

Die erfindungsgemäß hergestellten Formmassen weisen eine gute Schlagzähigkeit sowie ein verbessertes Fließverhalten auf.

Die Erfindung wird durch die folgenden, nicht einschränkenden Beispiele von bevorzugten erfindungsgemäßen Ausführungsformen und Vergleichsversuchen näher erläutert.

Prozentangaben beziehen sich, soweit nicht anders angegeben, auf das Gewicht.

Die Werte für die Schlagzähigkeit in kJ/m² wurden gemäß DIN 53 453-n, Ausgabe 5/75 bestimmt.

Das Fließverhalten und damit die Verarbeitbarkeit wurde anhand des Schmelzindex (Melt Volume Index) in ml/10 min beurteilt, der nach DIN 53735 bei 200°C und 21,6 kg Belastung gemessen wurde.

Die Produkte wurden zu Kleinnormstäben bei 240°C Schmelztemperatur und 60°C Formtemperatur gespritzt.

tert.-Butylperoxicrotonat hat bei 110°C eine Halbwertszeit von einer Stunde, tert.-Butyl-3-isopropenylcumylperoxid hat bei 139°C eine Halbwertszeit von einer Stunde.

### Beispiel 1 (erfindungsgemäß)

### a) Herstellung des Acrylkautschuks

In einen Kolben wurden 3370 g Cyclohexan gefüllt, unter Stickstoff gesetzt und unter Rühren auf 75°C erhitzt und danach 77 ml von Zulauf 1 und 8 ml von Zulauf 2 vorgelegt. Nach 15 min erfolgte die Zugabe des Rests der zwei Zuläufe im Verlauf von ca. 4 Stunden. Bei einem Umsatz von 94,7 %, bestimmt durch eine Messung des Feststoffgehalts, wurde der Versuch gekühlt und abgestellt.

### Zulauf 1

1500 g n-Butylacrylat
13.02 g Allylmethacrylat
26,4 g tert.-Butylperoxicrotonat

### Zulauf 2

80 ml Aceton
80 ml Toluol
1636 mg 2,2'-Azobis(isobutyronitril) (AIBN)

### b) Herstellung der Formmasse mit dem Acrylkautschuk

In einem Rotationsverdampfer wurde unter Vakuum das Cyclohexan des vorigen Schrittes entfernt und gegen eine bestimmte Menge Styrol ausgetauscht und dann so viel Acrylnitril zugegeben, daß eine Mischung C aus 69,2 Gew.-% Styrol, 23 Gew.-% Acrylnitril und 7,8 Gew.-% Acrylkautschuk entsteht. 1923 g dieser Lösung wurden zusammen mit 0,44 g Tetraethylenpentamin in einen 5 1-Stahlkessel eingefüllt und unter Stickstoff und Rühren auf 70°C erhitzt. Bei 20 % Umsatz erfolgte die Zugabe von 1,92 g tert.-Dodecylmercaptan und 2.31 g 3-(3,5-Di-tert.-butyl-4-hydroxyphenyl)-propionsäureoctadecylester (handelsübliches Antioxidans). Bei ca. 35 % Umsatz erfolgte die Zugabe von 2000 g Wasser, 20 g Polyvinylpyrrolidon mit einem K-Wert von 90 (gemessen gemäß E. Fikentscher, Cellulosechemie 13 (1932), S. 58-64), 2,0 g Tetranatriumdiphosphat und 59,8 g einer 10 %igen wässrigen Lösung eines handelsüblichen Polyvinylalkohols (verseiftes Polyvinylacetat mit einem mittleren Polymerisationsgrad von 30 und einem Verseifungsgrad von 92%). Der Polymerisationsansatz wurde 3 Stunden bei 110°C, 3 Stunden bei 130°C und 6 Stunden bei 140°C auspolymerisiert. Danach wurde der Ansatz gekühlt, das Polymer abfiltriert und getrocknet.

Bestimmte Eigenschaften der resultierenden Formmasse F sind in Tabelle 1 angegeben.

### Beispiel 2 (erfindungsgemäß)

Es wurde gemäß Beispiel 1 verfahren, jedoch wurde statt 0,44 g Tetraethylenpentamin 0,75 g N,N-Dimethylanilin verwendet. Bestimmte Eigenschaften der resultierenden Formmasse F sind in Tabelle 1 angegeben.

### Beispiel 3 (Vergleich)

Es wurde gemäß Beispiel 1 verfahren, jedoch ohne Zusatz von Tetraethylenpentamin bei der Herstellung der Formmasse F mit dem Acrylkautschuk B. Daher wurde bei der Herstellung der Formmasse F die Anfangstemperatur von 70°C auf 95°C erhöht.
Bestimmte Eigenschaften der resultierenden Formmasse F sind in Tabelle 1 angegeben.

### Beispiel 4 (Vergleich)

### a) Herstellung des Acrylkautschuks

In einen Kolben wurden 1685 g Cyclohexan gefüllt, unter Stickstoff gesetzt und unter Rühren auf 75°C erhitzt und danach 39 ml von Zulauf 1 und 4 ml von Zulauf 2 vorgelegt. Nach 15 min erfolgte die Zugabe des Rests der zwei Zuläufe im Verlauf von ca. 4 Stunden. Bei einem Umsatz von 90 % wurde gekühlt und der Versuch abgestellt.

### Zulauf 1

750 g n-Butylacrylat
6,12 Allylmethacrylat
13,2 g tert.-Butylperoxicrotonat
7,50 g tert.-Butyl-3-isopropenylcumylperoxid

### Zulauf 2

40 ml Aceton
40 ml Toluol
818 mg 2,2'-Azobis(isobutyronitril) (AIBN)

### b) Herstellung der Formmasse mit dem Acrylkautschuk

In einem Rotationsverdampfer wurde unter Vakuum das Cyclohexan des vorigen Schrittes entfernt und gegen eine bestimmte Menge Styrol ausgetauscht und dann so viel Acrylnitril zugegeben, daß eine Mischung aus 69,2 Gew.-% Styrol, 23 Gew.-% Acrylnitril und 7,8 Gew.-% Acrylkautschuk entsteht. 1923 g dieser Lösung wurden zusammen mit 1,92 g t-Dodecylmercaptan und 2,31 g 3-(3,5-Di-tert.-butyl-4-hydroxyphenyl)-propionsäureoctadecylester (handelsübliches Antioxidans) in einen 5 l-Stahlkessel gefüllt, unter Stickstoff gesetzt und unter Rühren auf 90°C erhitzt. Bei ca. 40 % Umsatz erfolgte der Zusatz von 2000 g Wasser, 20 g Polyvinylpyrrolidon mit einem K-Wert von 90 (gemessen gemäß E. Fikentscher Cellulosechemie 13 (1932), S. 58-64), 2,0 g Tetranatriumdiphosphat und 59,8 g einer 10 %igen wässrigen Lösung eines handelsüblichen Polyvinylalkohols (verseiftes Polyvinylacetat mit einem mittleren Polymerisationsgrad von 30 und einem Verseifungsgrad von 92%).

Der Polymerisationsansatz wurde 3 Stunden bei 110°C, 3 Stunden bei 130°C und 6 Stunden bei 140°C auspolymerisiert. Danach wurde der Ansatz gekühlt, das Polymer abfiltriert und getrocknet. Bestimmte Eigenschaften der resultierenden Formmasse F sind in Tabelle 1 angegeben.

### Beispiel 5 (erfindungsgemäß)

Es wurde gemäß Beispiel 4 verfahren, jedoch wurde bei der Herstellung der Formmasse F mit dem Acrylkautschuk B beim Einfüllen des Stahlkessels zusätzlich 3,3 g Tetraethylenpentamin zugegeben. Bestimmte Eigenschaften der resultierenden Formmasse F sind in Tabelle 1 angegeben.

**Tabelle 1**

| Beispiel | Schlagzähigkeit kJ/m² | Schmelzindex (MVI) ml/10 min |
|---|---|---|
| 1 (erfindungsgemäß) | 24 | 16 |
| 2 (erfindungsgemäß) | 23 | 18 |
| 3 (Vergleich) | 24 | 1,0 |
| | | |
| 4 (Vergleich) | 25 | <1 |
| 5 (erfindungsgemäß) | 25 | 5,2 |
| | | |

Wie aus Tabelle 1 ersichtlich ist, führt die Verwendung eines erfindungsgemäßen Redoxsystems zu besser fließfähigen Produkten bei einem unveränderten mechanischen Niveau.

## Patentansprüche

1. Verfahren zur Herstellung von mit Acrylkautschuk modifizierten Formmassen F durch
(a) Copolymerisation einer Mischung A, die
(a1) mindestens ein Alkylacrylat und/oder Alkylmethacrylat (Am1) der Formel (I)
CH₂ = CR¹ - COOR² (I)
worin
R¹ ein Wasserstoffatom oder eine Methylgruppe und
R² eine Alkylgruppe mit 1 bis 32 C-Atomen ist,
(a2) mindestens ein Peroxidgruppen-enthaltendes Monomeres (Am2) mit einer copolymerisationsfähigen C=C-Doppelbindung, und
(a3) gegebenenfalls ein weiteres Monomer (Am3) mit zwei oder mehr copolymerisationsfähigen C=C-Doppelbindungen und/oder
(a4) gegebenenfalls mindestens ein zusätzliches copolymerisierbares, olefinisch ungesättigtes Monomeres (Am4) enthält,
unter weitgehendem Erhalt der Peroxidgruppen der Monomeren (Am2) zu einem Acrylkautschuk B,
(b) Lösen oder Quellen des Acrylkautschuks B in einem oder mehreren die harte Pfropfschale bildenden olefinisch ungesättigten Monomeren (Cm) zu einer Mischung C, und
(c) Polymerisation der Mischung C zu der Acrylkautschuk modifizierten Formmasse F in einer oder mehreren Stufen, wobei die Polymerisation zumindest in der ersten Stufe und bis zu einem Umsatz von über 15 Gew.-% der Monomeren als Polymerisation in Substanz oder Lösung unter Bedingungen durchgeführt wird, bei denen die radikalbildenden Peroxidgruppen der einpolymerisierten Monomere (Am2) aufspalten,
dadurch gekennzeichnet, daß bei der Polymerisation der Mischung C die Zersetzung der Peroxidgruppen im Acrylkautschuk B durch die Verwendung eines Redoxsystems eingeleitet wird, das die einpolymerisierten Monomeren (Am2) und mindestens ein Reduktionsmittel R umfaßt.

2. Verfahren nach Anspruch 1, dadurch gekennzeichnet, daß man als Reduktionsmittel R ein oder mehrere Amine verwendet.

3. Verfahren nach Anspruch 1, dadurch gekennzeichnet, daß man als Reduktionsmittel R ein oder mehrere Metallionen, bevorzugt Ionen von Übergangsmetallen, verwendet.

4. Verfahren nach einem der Ansprüche 1 bis 3, dadurch gekennzeichnet, daß der Rest R² eine Alkylgruppe mit 1 bis 18 Kohlenstoffatomen, insbesondere 1 bis 8 Kohlenstoffatomen bedeutet.

5. Verfahren nach einem der Ansprüche 1 bis 3, dadurch gekennzeichnet, daß man n-Butylacrylat oder Ethylhexylacrylat als Alkylacrylat (Am1) verwendet.

6. Verfahren nach einem der Ansprüche 1 bis 5, dadurch gekennzeichnet, daß man tert.-Butyl-3-isopropenylcumylperoxid, tert.-Butylperoxicrotonat und/oder tert.-Butylmonoperoximaleat als Monomere (Am2) verwendet.

7. Verfahren nach einem der Ansprüche 1 bis 6, dadurch gekennzeichnet, daß als Monomere (Am3) Allyl(meth)acrylat und/oder Dihydrocyclopentadienylacrylat verwendet werden.

8. Verfahren nach einem der Ansprüche 1 bis 7, dadurch gekennzeichnet, daß als zusätzliche Monomere (Am4) Styrol, Acrylnitril und/oder Methyl(meth)acrylat verwendet werden.

9. Verfahren nach einem der Ansprüche 1 bis 8, dadurch gekennzeichnet, daß als Monomere (Cm) Styrol, Acrylnitril und/oder Methylmethacrylat verwendet werden.

10. Verfahren nach einem der Ansprüche 1 bis 9, dadurch gekennzeichnet, daß das Monomergemisch A
30 bis 99,95 Gew.-% des Alkylacrylats und/oder -methacrylats (Am1),
0,05 bis 10 Gew.-% mindestens eines der Monomeren (Am2), und
0 bis 60 Gew.-% mindestens eines der Monomeren (Am3) und/ oder (Am4),
enthält.

11. Verfahren nach einem der Ansprüche 1 bis 10, dadurch gekennzeichnet, daß der Acrylkautschuk B vorzugsweise eine Glasübergangstemperatur von unter 0°C aufweist.

12. Verfahren nach einem der Ansprüche 1 bis 11, dadurch gekennzeichnet, daß Acrylkautschuk-modifizierte Formmassen F hergestellt werden, die 1 bis 60 Gew.-% des Acrylkautschuks B, bezogen auf die Gesamtmenge der Acrylkautschuk-modifizierten Formmasse F enthalten.

13. Verfahren nach einem der Ansprüche 1 bis 12, dadurch gekennzeichnet, daß die Polymerisation der Mischung C nach einem Umsatz von mindestens 15 % als Suspensionspolymerisation weitergeführt wird.

14. Acrylkautschuk-modifizierte Formmasse F, erhältlich nach einem der Ansprüche 1 bis 13.

15. Acrylkautschuk-modifizierte Formmasse F, erhältlich nach einem der Ansprüche 1 bis 14, dadurch gekennzeichnet, daß die Kautschukteilchen in der Polymermatrix einen Durchmesser von 0,1 bis 20 µm aufweisen.

## Claims

1. A process for the preparation of molding materials F, modified with acrylic rubber, by
(a) copolymerization of a mixture A, which contains
(a1) at least one alkyl acrylate or alkyl methacrylate (Am1) of the formula (I)
CH₂ = CR¹ - COOR² (I)
where
R¹ is hydrogen or methyl and
R² is alkyl of 1 to 32 carbon atoms,
(a2) at least one peroxy-containing monomer (Am2) having a copolymerizable C=C double bond and
(a3) if required, a further monomer (Am3) having two or more copolymerizable C=C double bonds or
(a4) if required, at least one additional, copolymerizable, olefinically unsaturated monomer (Am4),
with substantial retention of the peroxy groups of the monomers (Am2), to give an acrylic rubber B,
(b) dissolution or swelling of the acrylic rubber B in one or more olefinically unsaturated monomers (Cm) forming the hard graft shell to give a mixture C, and
(c) polymerization of the mixture C to give the molding material F modified with acrylic rubber in one or more stages, the polymerization being carried out, at least in the first stage and up to a conversion of more than 15% by weight of the monomers, by mass or solution polymerization under conditions under which the peroxy groups of the polymerized monomers (Am2) which form free radicals undergo cleavage,
wherein, in the polymerization of the mixture C, the decomposition of the peroxy groups in the acrylic rubber B is initiated by using a redox system which comprises the polymerized monomers (Am2) and at least one reducing agent R.

2. A process as claimed in claim 1, wherein the reducing agent R used comprises one or more amines.

3. A process as claimed in claim 1, wherein the reducing agent R used comprises one or more metal ions, preferably ions of transition metals.

4. A process as claimed in any of claims 1 to 3, wherein R² is alkyl of 1 to 18, in particular 1 to 8, carbon atoms.

5. A process as claimed in any of claims 1 to 3, wherein the alkyl acrylate (Aml) used is n-butyl acrylate or ethylhexyl acrylate.

6. A process as claimed in any of claims 1 to 5, wherein tert-butyl 3-isopropenylcumyl peroxide, tert-butyl peroxicrotonate or tert-butyl monoperoxymaleate is used as monomers (Am2).

7. A process as claimed in any of claims 1 to 6, wherein allyl (meth)acrylate or dihydrocyclopentadienyl acrylate is used as monomers (Am3).

8. A process as claimed in any of claims 1 to 7, wherein styrene, acrylonitrile or methyl (meth)acrylate is used as additional monomers (Am4).

9. A process as claimed in any of claims 1 to 8, wherein styrene, acrylonitrile or methyl methacrylate is used as monomers (Cm).

10. A process as claimed in any of claims 1 to 9, wherein the monomer mixture A contains
from 30 to 99.95% by weight of the alkyl acrylate or methacrylate (Am1),
from 0.05 to 10% by weight of at least one of the monomers (Am2) and
from 0 to 60% by weight of at least one of the monomers (Am3) or (Am4).

11. A process as claimed in any of claims 1 to 10, wherein the acrylic rubber B preferably has a glass transition temperature of less than 0°C.

12. A process as claimed in any of claims 1 to 11, wherein a molding material F modified with acrylic rubber and containing from 1 to 60% by weight, based on the total amount of the molding material F modified with acrylic rubber, of the acrylic rubber B is prepared.

13. A process as claimed in any of claims 1 to 12, wherein the polymerization of the mixture C is continued by suspension polymerization after a conversion of at least 15%.

14. A molding material F modified with acrylic rubber and obtainable as claimed in any of claims 1 to 13.

15. A molding material F modified with acrylic rubber and obtainable as claimed in any of claims 1 to 14, wherein the rubber particles in the polymer matrix have a diameter of from 0.1 to 20 µm.

## Revendications

1. Procédé pour la préparation de matières à mouler F modifiées par un caoutchouc acrylique, par
(a) copolymérisation d'un mélange A, qui contient
(a1) au moins un acrylate d'alkyle et/ou méthacrylate d'alkyle (Am1) de formule I
CH₂ = CR¹ - COOR² (I)
dans laquelle
R¹ représente un atome d'hydrogène ou un groupe méthyle et
R₂ représente un groupe alkyle en C1-C32,
(a2) au moins un monomère contenant des groupes peroxyde (Am2) et une double liaison C=C copolymérisable, et
(a3) le cas échéant un autre monomère (Am3) contenant deux doubles liaisons C=C copolymérisables ou plus, et/ou
(a4) le cas échéant au moins un autre monomère à insaturation oléfinique copolymérisable (Am4),
avec pratiquement conservation des groupes peroxyde des monomères (Am2), en un caoutchouc acrylique B,
(b) dissolution ou gonflement du caoutchouc acrylique B dans un ou plusieurs monomères à insaturation oléfinique formant l'enveloppe de greffage dure (Cm), donnant un mélange C et
(c) polymérisation du mélange C en la matière à mouler modifiée par le caoutchouc acrylique F en un ou plusieurs stades opératoires, la polymérisation étant conduite, au moins au premier stade et jusqu'à un taux de conversion de plus de 15% en poids des monomères, sous forme d'une polymérisation en masse ou en solution, dans des conditions dans lesquelles les groupes peroxyde formant des radicaux libres des monomères polymérisés (Am2) sont scindés,
caractérisé par le fait que, à la polymérisation du mélange C, la décomposition des groupes peroxyde contenus dans le caoutchouc acrylique B est induite par l'utilisation d'un système rédox qui comprend les mononères polymérisés (Am2) et au moins un agent réducteur R.

2. Procédé selon la revendication 1, caractérisé par le fait que l'agent réducteur R utilisé consiste en une ou plusieurs amines

3. Procédé selon revendication 1, caractérisé par le fait que l'agent réducteur R utilisé consiste en un ou plusieurs ions métalliques, de préférence des ions de métaux de transition.

4. Procédé selon une des revendications 1 à 3, caractérisé par le fait que le symbole R2 représente un groupe alkyle en C1-C18, plus spécialement en C1-C8.

5. Procédé selon une des revendications 1 à 3, caractérisé par le fait que l'acrylate d'alkyle (Am1) consiste en acrylate de n-butyle ou acrylate d'éthylhexyle.

6. Procédé selon une des revendications 1 à 5, caractérisé par le fait que l'on utilise en tant que monomères (Am2) le peroxyde de tert-butyl-3-isopropénylcumyle, le peroxycrotonate de tert-butyle et/ou le mono-peroxymaléate de tert-butyle.

7. Procédé selon une des revendications 1 à 6, caractérisé par le fait que l'on utilise en tant que monomères (Am3) le (méth)acrylate d'allyle et/ou l'acrylate de dihydrocyclopentadiényle.

8. Procédé selon une des revendications 1 à 7, caractérisé par le fait que l'on utilise en tant qu'autres monomères (Am4) le styrène, l'acrylonitrile et/ou le (méth)acrylate de méthyle.

9. Procédé selon une des revendications 1 à 8, caractérisé par le fait que l'on utilise en tant que monomères (Cm) le styrène, l'acrylonitrile et/ou le méthacrylate de méthyle.

10. Procédé selon une des revendications 1 à 9, caractérisé par le fait que le mélange de monomères A contient
30 à 99,95% en poids de l'acrylate et/ou méthacrylate d'alkyle (Am1),
0,05 à 10% en poids d'au moins un des monomères (Am2), et
0 à 60% en poids d'au moins un des monomères (Am3) et/ou (Am4).

11. Procédé selon une des revendications 1 à 10, caractérisé par le fait que le caoutchouc acrylique B a de préférence une température de transition du second ordre inférieure à 0° C.

12. Procédé selon une des revendications 1 à 11, caractérisé par le fait que l'on prépare des matières à mouler modifiées par un caoutchouc acrylique F qui contiennent 1 à 60 % en poids du caoutchouc acrylique B par rapport au poids total de la matière à mouler F modifiée par un caoutchouc acrylique.

13. Procédé selon une des revendications 1 à 12, caractérisé par le fait que la polymérisation du mélange C est poursuivie sous forme d'une polymérisation en suspension après un taux de conversion d'au moins 15 %.

14. Matière à mouler modifiée par un caoutchouc acrylique F, obtenue selon une des revendications 1 à 13.

15. Matière à mouler modifiée par un caoutchouc acrylique F, obtenue selon l'une des revendications 1 à 14 et caractérisée par le fait que les particules de caoutchouc contenues dans la gangue de polymère ont un diamètre de 0,1 à 20 µm.
